# EUROPEAN PATENT APPLICATION

(11) **EP 1 895 257 A1**
(43) Date of publication of application: **05.03.2008**
(21) Application number: 06745833.1
(22) Date of filing: 28.04.2006
(51) Int. Cl.: F28D 7/02

(54) **HEAT EXCHANGER**

(30) Priority: 16.05.2005 JP 2005142433
(71) Applicant: DAIKIN INDUSTRIES, LTD., Osaka-shi, Osaka 530-8323 (JP)
(72) Inventor: Numata, Mitsuharu Kanaoka Fact.Sakai Plant,Daikin Ind.Ltd, Sakai-shi, Osaka 5918511 (JP); Shibata, Yutaka c/o Kanaoka Factory, Sakai Plant, Sakai-shi, Osaka; 5918511 (JP)
(74) Representative: HOFFMANN EITLE
(86) International application number: PCT/JP2006/308974
(87) International publication number: WO 2006/123536

(57) **Abstract**

A brazing material 315 in a paste form is applied in advance to dented portions 314 formed on the outer surface of a core pipe 31, and then a pipe 32 is disposed on the pipe 31, and brazing is carried out in a furnace. In this way, the brazing material 315 that was melted by the heat will be reliably poured into the dented portions 314 and bonded thereto after being cooled down. Thus, the dented portions 314 formed on the outer surface of the core pipe 31 can be reliably filled with the brazing material 33, which consequently eliminates a poor contact between the core pipe 31 and the winding pipe 32. In addition, even if the wall thickness of portions in which projections 313 are formed are made thinner in the process of forming the projections, the dented portions 314 formed on the outer surface are filled with the brazing material 33, so that the core pipe thickness can be reinforced, and the reduction in strength of the portions with the projections 313 can be prevented.

## Description

### TECHNICAL FIELD

The present invention relates to a heat exchanger. More specifically, the present invention relates to a heat exchanger comprising a core pipe having projections that are formed on the inner surface thereof by pressing the outer surface of the core pipe, and a winding pipe that is wound around the outer surface of the core pipe.

### BACKGROUND ART

Some heat exchangers used for air conditioners, water heaters, and the like are provided with a core pipe that forms a passage of a first fluid, a winding pipe that is wound around the outer surface of the core pipe and forms a passage of a second fluid, and a heat exchanger that exchanges heat between the first fluid and the second fluid. For example, as disclosed in patent document 1, a double pipe heat exchanger is used as a heat exchanger for a water heater such as a heat pump water heater. Such a heat exchanger is formed by two pipes: a core pipe through which water flows and a winding pipe through which the refrigerant flows. These two pipes are spirally wound into an oval shape and used as one heat exchanger unit, and a main body of the heat exchanger is formed by mutually superposing and connecting a number of such heat exchanger units to each other. In addition, another technology has been proposed to improve the heat transfer performance of a heat transfer tube used in a heat exchanger. With this technology, projections are provided on the inner surface of the heat transfer tube by pressing the outer surface of the heat transfer tube so as to improve the heat transfer performance (Patent Document 2).
Patent Document 1
   JP-A Publication No. S51-105158
Patent Document 2
   JP-A Publication No. H06-70556

### DISCLOSURE OF THE INVENTION

### <Problem the Invention is to Solve>

However, when a core pipe having projections that are formed on the inner surface thereof by pressing the outer surface of the core pipe is used for a heat exchanger, such a core pipe has dents that are formed on the outer surface thereof at portions corresponding to the projections on the inner surface. When a winding pipe is wound around the core pipe and then the core pipe is spirally wound into an oval shape, since a cross-section of the core pipe has an irregular shape because of the projections, there is a risk that a poor contact will be formed between the core pipe and the winding pipe, which may consequently reduce the heat transfer performance. In addition, the wall thickness of projecting portions of the core pipe may be made thinner in a process of forming the projections than the wall thickness of non-projecting portions of the core pipe, which may consequently reduce the strength of the projecting portions.

Therefore, an object of the present invention is to overcome the above problem and to improve the heat transfer performance of a heat exchanger comprising a core pipe having projections that are formed on the inner surface thereof by pressing the outer surface of the core pipe, and a winding pipe that is wound around the outer surface of the core pipe.

### <Means to Solve the Problem>

A heat exchanger according to a first aspect of the present invention is a heat exchanger that exchanges heat between a first fluid and a second fluid, the heat exchanger comprising a core pipe, a winding pipe, and a brazing material. Here, the core pipe forms a passage of a first fluid, and the core pipe has projections that are formed on the inner surface thereof by pressing the outer surface of the core pipe and also has dented portions on the outer surface thereof. The winding pipe forms a passage of a second fluid, and the winding pipe is wound around the outer surface of the core pipe. The brazing material is poured into the dented portions located in the vicinity of the winding pipe.

Here, the core pipe having the projections on the inner surface thereof is used. Because of the projections, the heat transfer performance of the core pipe is improved. At the same time, dents are formed on the outer surface of the core pipe at portions corresponding to the projections that are formed on the inner surface of the core pipe. In order to eliminate a poor contact between the core pipe and the winding pipe when the winding pipe is wound around these dented portions, the brazing material is poured into the dented portions located in the vicinity of the winding pipe. In this way, when the brazing material is poured into the dented portions, the dented portions formed on the outer surface of the core pipe are filled with the brazing material, which consequently eliminates a poor contact between the core pipe and the winding pipe.

Note that when the brazing material is poured into the dented portions located in the vicinity of the winding pipe, these dented portions are filled with the brazing material. Therefore, even if the wall thickness of projecting portions of the core pipe is made thinner in the process of forming the projections than the wall thickness of non-projecting portions of the core pipe, the core pipe thickness can be reinforced, and thus the reduction in strength of the projecting portions can be prevented.

A heat exchanger according to a second aspect of the present invention is the heat exchanger described above, in which the brazing material is a brazing material in a paste form, which is applied to the dented portions of the core pipe in advance and then melted and bonded thereto.

Here, the brazing material in a paste form is applied to the dented portions of the core pipe in advance, and then brazing is carried out, for example, in a furnace. In this way, the brazing material melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, and the core pipe thickness can be reinforced, thus the reduction in strength of the projecting portions can be prevented.

A heat exchanger according to a third aspect of the present invention is the heat exchanger described above, in which the brazing material is a brazing material in a linear form, which is disposed between the core pipe and the winding pipe in advance and then is melted and bonded thereto.

Here, the brazing material is disposed between the core pipe and the winding pipe in advance, and then brazing is carried out, for example, in a furnace. The dented portions work in a similar way as a capillary tube. The brazing material melted by the heat is poured into the dented portions due to the capillary force. Thus, a complicated process of applying the brazing material for each dented portion can be avoided, which results in improving the brazing efficiency. In addition, the brazing material that was melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, so that the core pipe thickness can be reinforced.

A heat exchanger according to a fourth aspect of the present invention is the heat exchanger described above, wherein the brazing material is a brazing material in a linear form, which is disposed on the winding pipe wound around the core pipe and then melted and bonded thereto.

Here, the brazing material is disposed on the winding pipe wound around the core pipe, and then brazing is carried out, for example, in a furnace. For example, when the core pipe is provided with helically arranged projections and the winding pipe is also helically wound around the outer surface of the core pipe, it will be difficult to dispose a brazing material between the core pipe and the winding pipe in advance. Therefore, the brazing material in a linear shape is first disposed on the winding pipe wound around the core pipe, and then brazing is carried out. Also in this case, the brazing material that is melted by the heat will be poured into the dented portions due to the capillary force. Thus, a complicated process of applying the brazing material for each dented portion can be avoided, which results in improving the brazing efficiency. In addition, the brazing material that was melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, so that the core pipe thickness can be reinforced.

A heat exchanger according to a fifth aspect of the present invention is the heat exchanger described above, in which the brazing material is a brazing material in a paste form, which is applied to the winding pipe wound around the core pipe in advance and then melted and bonded thereto.

Here, the brazing material in a paste form is applied to the winding pipe wound around the core pipe, and then brazing is carried out, for example, in a furnace. As a result, the same effect as in the fourth aspect can be obtained.

### <Effect of the Invention>

As described above, the following effects can be obtained according to the present invention.

With the heat exchanger according to the first aspect of the present invention, the core pipe having the projections on the inner surface thereof is used. Because of the projections, the heat transfer performance of the core pipe is improved. At the same time, dents are formed on the outer surface of the core pipe at portions corresponding to the projections that are formed on the inner surface of the core pipe. In order to eliminate a poor contact between the core pipe and the winding pipe when the winding pipe is wound around these dented portions, a brazing material is poured into the dented portions located in the vicinity of the winding pipe. In this way, when the brazing material is poured into the dented portions, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, and the core pipe thickness can be reinforced, thus the reduction in strength of the projecting portions can be prevented.

With the heat exchanger according to the second aspect of the present invention, the brazing material in a paste form is applied to the dented portions of the core pipe in advance, and then brazing is carried out, for example, in a furnace. In this way, the brazing material melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, and the core pipe thickness can be reinforced.

With the heat exchanger according to the third aspect of the present invention, the brazing material is disposed between the core pipe and the winding pipe in advance, and then brazing is carried out, for example, in a furnace. The dented portions work in a similar way as a capillary tube. The brazing material melted by the heat is poured into the dented portions due to the capillary force. Thus, a complicated process of applying the brazing material for each dented portion can be avoided, which results in improving the brazing efficiency. In addition, the brazing material that was melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, so that the core pipe thickness can be reinforced.

With the heat exchanger according to the fourth aspect of the present invention, the brazing material is disposed on the winding pipe wound around the core pipe, and then brazing is carried out, for example, in a furnace. For example, when the core pipe is provided with helically arranged projections and the winding pipe is also helically wound around the outer surface of the core pipe, it will be difficult to dispose a brazing material between the core pipe and the winding pipe in advance. Therefore, the brazing material in a linear shape is first disposed on the winding pipe wound around the core pipe, and then brazing is carried out. Also in this case, the brazing material that is melted by the heat will be poured into the dented portions due to the capillary force. Thus, a complicated process of applying the brazing material for each dented portion can be avoided, which results in improving the brazing efficiency. In addition, the brazing material that was melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, so that the core pipe thickness can be reinforced.

With the heat exchanger according to the fifth aspect of the present invention, the brazing material in a paste form is applied to the winding pipe wound around the core pipe, and then brazing is carried out, for example, in a furnace. As a result, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, so that the core pipe thickness can be reinforced.

### BRIEF DESCRIPTION OF THE DRAWINGS

Figure 1 is a schematic diagram of a heat pump water heater.
Figure 2 is a schematic diagram of a water heat exchanger.
Figure 3 is a plan view of a core pipe.
Figure 4 is an enlarged view of section A-A in Figure 3.
Figure 5 illustrates a brazing material that is melted and bonded according to Embodiment 1.
Figure 6 illustrates a brazing material that is melted and bonded to according Embodiment 2.
Figure 7 illustrates a brazing material that is melted and bonded to according Embodiment 3.
Figure 8 illustrates a brazing material that is melted and bonded to according Embodiment 4.

### DESCRIPTION OF THE REFERENCE SYMBOLS

- 1: hot water supply unit
- 100: heat pump water heater
- 2: heat pump unit
- 30: water heat exchanger
- 31,41,51,61,71: core pipe
- 311: water inlet
- 312: water outlet
- 313,413,513,613,713: projections
- 314,414,514,614,714: dented portion
- 32,42,72: winding pipe
- 33,43,53,63: brazing material
- 52,62: straight pipe

### DETAILED DESCRIPTION OF THE INVENTION

### <Embodiment 1>

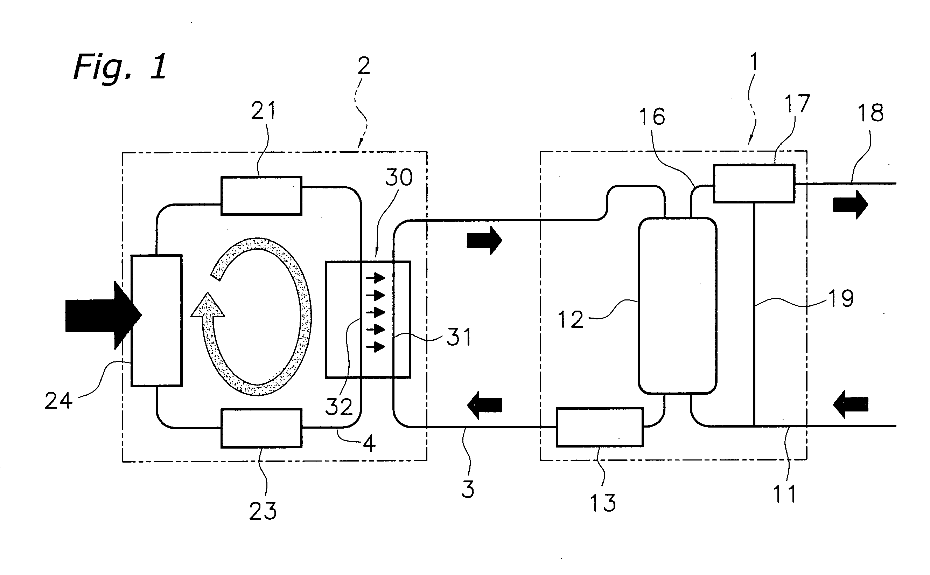

The heat exchanger according to the present invention will now be described based on the attached drawings and the embodiments. Figure 1 is a schematic diagram of a heat pump water heater in which a heat exchanger of the present invention is employed. In the heat pump water heater shown in Figure 1, water is heated in a single pass from about 10°C to about 90°C over a long time of period in order to efficiently use low-cost nighttime electric power. Here, the heat pump water heater comprises a hot water supply unit 1, and a heat pump unit 2. The following are successively coupled in the hot water supply unit 1: a service water pipe 11, a hot water storage tank 12, a water circulation pump 13, a water supply pipe 3, a core pipe 31 that constitutes a water heat exchanger 30, a hot water pipe 16, a mixing valve 17, and a hot water supply pipe 18. Here, service water is supplied from the water supply pipe 11 to the hot water storage tank 12. Low temperature water is supplied by the water circulation pump 13 from the bottom part of the hot water storage tank 12 to the core pipe 31 of the water heat exchanger 30, and heated. The heated hot water flows into the upper part of the hot water storage tank 12. The high temperature hot water that exits from the upper part of the hot water storage tank 12 via the hot water pipe 16 is mixed with the cold water of a mixed water pipe 19 by the mixing valve 17. This mixing valve 17 regulates the temperature of the supplied hot water, which is supplied to the user by the hot water supply pipe 18.

Next, the heat pump unit 2 is provided with a refrigerant circulating circuit that comprises a compressor 21, the water heat exchanger 30, an expansion valve 23, and an air heat exchanger 24, which are connected sequentially by a winding pipe 32. The refrigerant is compressed to a high pressure by the compressor 21, and is then sent to the water heat exchanger 30. The refrigerant whose heat was exchanged in the water heat exchanger 30 passes through the expansion valve 23, and is supplied to the air heat exchanger 24. The refrigerant absorbs heat from the surroundings, and then circulates back to the compressor 21.

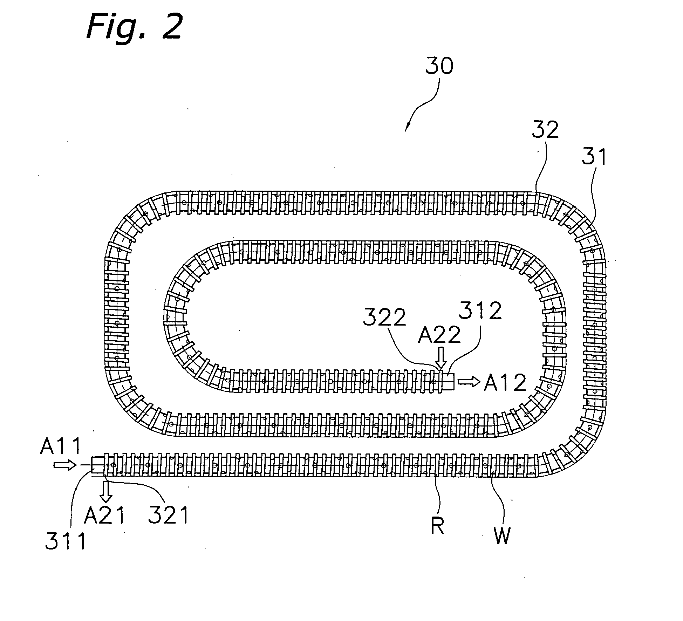

Figure 2 is a schematic diagram of the water heat exchanger 30 in the heat pump water heater. As shown in Figure 2, the water heat exchanger 30 comprises the core pipe 31 and the winding pipe 32. The core pipe 31 is spirally formed into an oval shape in the same plane, and forms a water passage W. The winding pipe 32 is helically wound around the outer circumference of the core 31, and forms a refrigerant passage R. Further, the outer circumferential side of the spiral of the core pipe 31 is a water inlet 311, and the center side of the spiral of the heat transfer pipe 31 is a water outlet 312. In the water heat exchanger 30, the refrigerant inside the winding pipe 32 flows into the refrigerant inlet 322 from the A22 direction, and radiates heat. Subsequently, the refrigerant flows out of the refrigerant outlet 321 in the A21 direction. The service water supplied into the water inlet 311 from the A11 direction is heated by this heat, turns into hot water, and flows out of the water outlet 312 in the A12 direction.

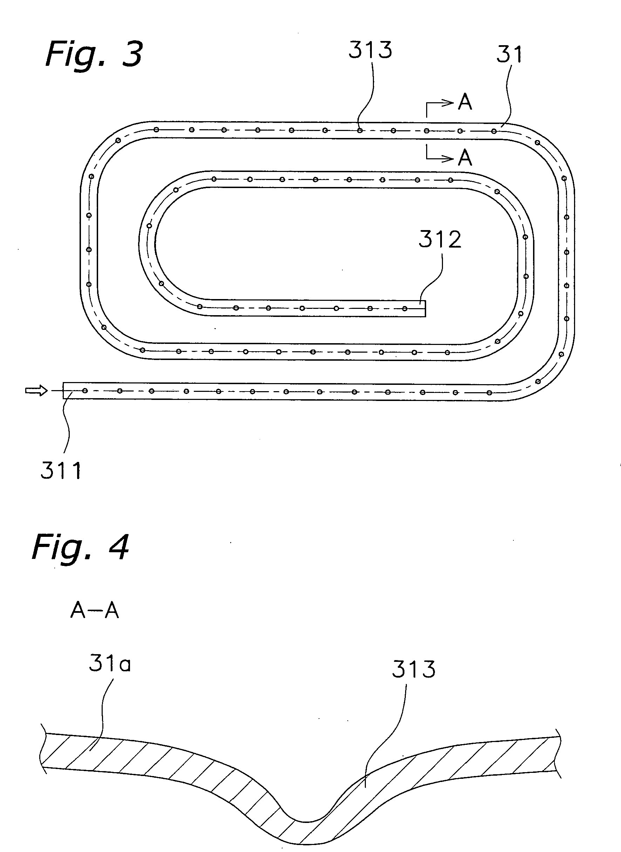

Next the core pipe 31 is described. As shown in Figure 3, this embodiment uses the core pipe 31 having an inside diameter D of 8 mm in which projections each having a height H1 of 1 mm are provided vertically symmetric at a 20 mm pitch in the pipe axial direction on the pipe inner surface. Figure 3 illustrates only projections 313 provided upward when viewed from the paper surface direction. In addition, flat surface parts 31 a that are not provided with the projections exist on the inner surface of the core pipe 31. Accordingly, the heat transfer coefficient is improved because of the projections 313 provided inside the pipe, which consequently improves the overall performance of the heat exchanger.

Figure 4 is an enlarged view of cross section A-A of one of the projections 313 provided inside the core pipe 31 in Figure 3. Here, as for the core pipe 31, when the wall thickness is compared between the flat surface parts 31a in which the projections are not formed and portions in which the projections 313 are formed, the wall thickness of the portions in which the projections 313 are formed is thinner. At such portions of the core pipe, where the wall thickness is thinner, the strength of the pipe wall may be reduced.

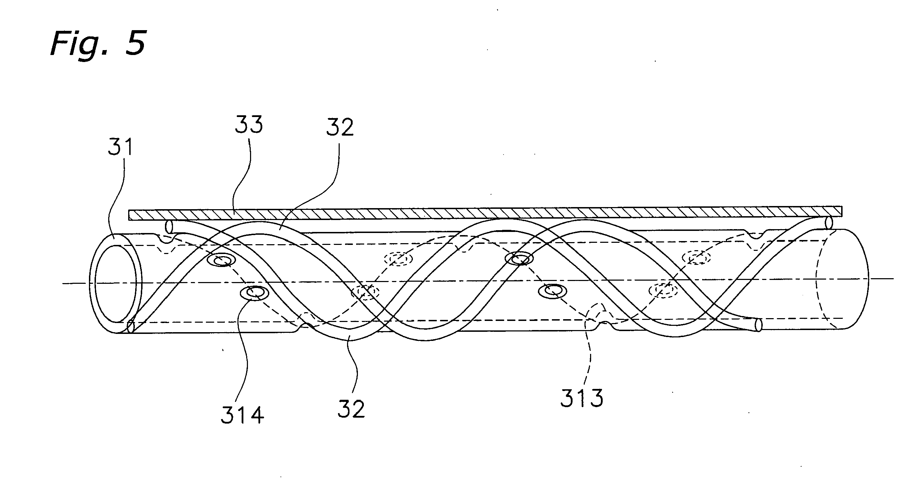

Therefore, as shown in Figure 5, with the heat exchanger 30 in which a plurality of winding pipes 32, 32 are helically wound around the core pipe 31, a brazing material 33 in a linear form is first disposed on the winding pipes 32, 32, and then brazing is carried out in a furnace (not shown). Here, the plurality of winding pipes 32, 32 are helically wound around the core pipe 31, and the core pipe 31 is provided with the projections 313 that are helically arranged. Consequently, it will be difficult to dispose a brazing material between the core pipe and the winding pipe in advance. Therefore, the brazing material 33 in a linear form is first disposed on the plurality of winding pipes 32, 32 wound around the core pipe 31, and then brazing is carried out. In this case, the brazing material 33 melted by the heat is poured into dented portions 314 due to the capillary force. Consequently, with the heat exchanger in which the plurality of winding pipes 32, 32 are helically wound around the core pipe 31, it is possible to improve the brazing efficiency. In addition, the brazing material melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, and the core pipe thickness can be reinforced, thus the reduction in strength of the projecting portions can be prevented.

### <Embodiment 2>

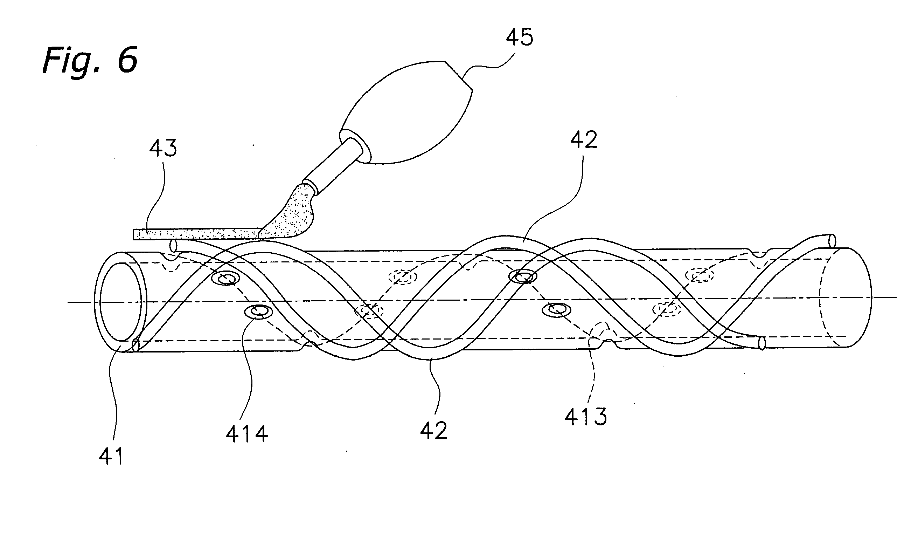

In Embodiment 2, as shown in Figure 6, with the heat exchanger in which a plurality of winding pipes 42, 42 are helically wound around a core pipe 41, a brazing material 43 in a paste form, which is contained in a container 45, is applied to the winding pipes 42, 42, and then brazing is carried out in a furnace (not shown). In this case, the brazing material 43 melted by the heat will be poured into dented portions 414 due to the capillary force. Consequently, with the heat exchanger in which the plurality of winding pipes 42, 42 are helically wound around the core pipe 41, it is possible to improve the brazing efficiency. In addition, the brazing material melted by the heat is reliably poured into the dented portions and bonded thereto after being cooled down. Thus, the dented portions formed on the outer surface of the core pipe can be reliably filled with the brazing material, which consequently eliminates a poor contact between the core pipe and the winding pipe. In addition, even if the wall thickness of projecting portions of the core pipe is made thinner in the process of forming the projections than the wall thickness of non-projecting portions of the core pipe, the dented portions formed on the outer surface of the core pipe are filled with the brazing material, and the core pipe thickness can be reinforced, thus the reduction in strength of the projecting portions can be prevented.

### <Embodiment 3>

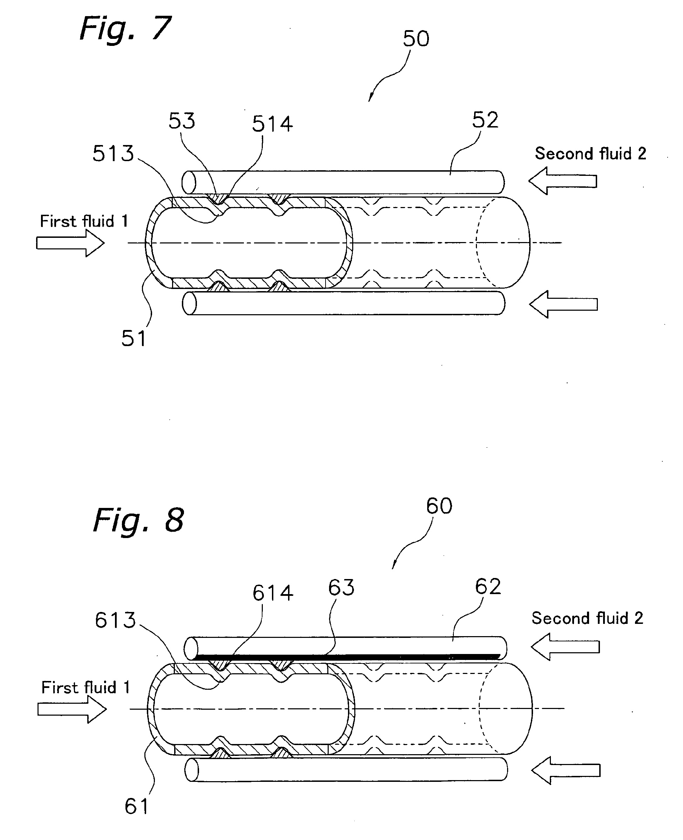

In Embodiment 3, as shown in Figure 7, a heat transfer tube 52 that forms a refrigerant passage R is not a winding pipe but a straight pipe. In other words, with a heat exchanger 50, a straight pipe 52 that forms the refrigerant passage R is disposed on the outer surface of a core pipe 51 that forms a water passage W. Here, a brazing material 53 in a paste form is applied in advance to dented portions 514 formed on the outer surface of the core pipe 51, and a straight pipe 52 is disposed on the core pipe 51, then brazing is carried out in a furnace (not shown). In this way, the brazing material 53 melted by the heat is reliably poured into the dented portions 514 and bonded thereto after being cooled down. Thus, the dented portions 514 formed on the outer surface of the core pipe 51 can be reliably filled with the brazing material 53, which consequently eliminates a poor contact between the core pipe 51 and the pipe 52. In addition, even if the wall thickness of portions with projections 513 are made thinner in the process of forming the projections, the dented portions 514 formed on the outer surface of the core pipe 51 are filled with the brazing material 53, so that the core pipe thickness can be reinforced. Thus the reduction in strength of the portions with the projections 513 can be prevented.

### <Embodiment 4>

Further, in Embodiment 4, as shown in Figure 8, a heat transfer tube 62 that forms a refrigerant passage R is not a winding pipe but a straight pipe. In other words, with a heat exchanger 60, a straight pipe 62 that forms the refrigerant passage R is disposed on the outer surface of the core pipe 61 that forms a water passage W. Here, a brazing material 63 is disposed between a core pipe 61 and the straight pipe 62 in advance, and then brazing is carried out in a furnace (not shown). Dented portions 614 work in a similar way as a capillary tube. The brazing material 63 melted by the heat is poured into the dented portions 614 due to the capillary force. Thus, a complicated process of applying the brazing material for each dented portion can be avoided, which results in improving the brazing efficiency. In addition, the brazing material 63 melted by the heat is reliably poured into the dented portions 614 and bonded thereto after being cooled down. Thus, the dented portions 614 formed on the outer surface of the core pipe 61 can be reliably filled with the brazing material 63, which consequently eliminates a poor contact between the core pipe 61 and the straight pipe 62.

## Claims

1. A heat exchanger (30) configured to exchange heat between a first fluid and a second fluid, comprising:
a core pipe (31, 41, ---) configured to form a passage of a first fluid and provided with projections (313, 413, ---) that are formed on the inner surface thereof by pressing the outer surface of the core pipe (31, 41, ---), and dented portions (314, 414, ---) that are formed on the outer surface of the core pipe (31, 41, ---);
a winding pipe (32, 42, ---) configured to form a passage of a second fluid and being wound around the outer surface of the core pipe; and
a brazing material (33, 43, ---) being poured into the dented portions located in the vicinity of the winding pipe.

2. The heat exchanger according to claim 1, wherein
the brazing material (33,43, ---) is a brazing material in a paste form, which is applied to the dented portions (314,414, ---) of the core pipe (31,41, ---) in advance and then melted and bonded thereto.

3. The heat exchanger according to claim 1, wherein
the brazing material is a brazing material in a linear form, which is disposed between the core pipe and the winding pipe in advance and then is melted and bonded thereto.

4. The heat exchanger according to claim 1, wherein
the brazing material is a brazing material in a linear form, which is disposed on the winding pipe wound around the core pipe in advance and then melted and bonded thereto.

5. The heat exchanger according to claim 1, wherein
the brazing material is a brazing material in a paste form, which is applied to the winding pipe wound around the core pipe in advance and then melted and bonded thereto.
